# FASCICULE DE BREVET EUROPEEN

(11) **EP 3 561 715 B1**
(45) Date de publication et mention de la délivrance du brevet: **13.01.2021**
(21) Numéro de dépôt: 19171044.1
(22) Date de dépôt: 25.04.2019
(51) Int. Cl.: G06K 7/08, H05K 1/02

(54) **SYSTÈME DE SECURISATION D'UN LECTEUR DE CARTE MAGNÉTIQUE, LECTEUR DE CARTE MAGNÉTIQUE ET DISPOSITIF ÉLECTRONIQUE CORRESPONDANTS**
SICHERUNGSSYSTEM EINES MAGNETKARTENLESEGERÄTS, ENTSPRECHENDES MAGNETKARTEN-LESEGERÄT UND ENTSPRECHENDE ELEKTRONISCHE VORRICHTUNG
SYSTEM FOR SECURING A MAGNETIC CARD READER, CORRESPONDING MAGNETIC CARD READER AND ELECTRONIC DEVICE

(30) Priorité: 27.04.2018 FR 1853730
(43) Date de publication de la demande: 30.10.2019
(73) Titulaire: INGENICO GROUP, 75015 Paris (FR)
(72) Inventeur: CHOWDAHRY, Ferhaj, 95280 JOUY-LE-MOUTIER (FR); BALASSE, Johann, 92400 COURBEVOIE (FR); NEVEU, Ludovic, 85180 CHATEAU D'OLONNE (FR); QUENET, Alexandre, 75013 PARIS (FR)
(74) Mandataire: Vidon Brevets & Stratégie

(56) Documents cités:
- EP-A2- 2 824 622
- US-A1- 2008 265 032
- US-A1- 2015 097 033
- US-B1- 9 449 204

## Description

### 1 DOMAINE DE L'INVENTION

La présente invention se rapporte au domaine de la protection des dispositifs électronique de lecture de carte magnétique. De tels dispositifs de lecture de carte magnétique sont employés dans de nombreux appareils tels que des terminaux de paiement électronique, des dispositifs d'authentification ou d'identification ou encore des dispositifs de lecture de contenus.

La présente invention se rapporte plus particulièrement à la sécurisation de tels dispositifs de lecture de carte magnétique afin qu'il ne soit pas possible de capter ou de surveiller des signaux qui sont échangés au sein de ces dispositifs.

### 2 ART ANTÉRIEUR

Les appareils qui intègrent des dispositifs de lecture de carte magnétique, tels que des terminaux de paiement, comprennent de nombreux dispositifs de sécurisation et mettent en œuvre de nombreuses méthodes permettant d'assurer que les appareils sont utilisés conformément aux usages pour lesquels ils ont été prévus et respectent des normes de sécurité qui sont imposées par des organismes de certification.

Par exemple, dans le domaine des terminaux de paiement électronique pour cartes à puces, les fabricants sont contraints de respecter la norme PCI PED en vigueur (pour « *Payment Card Industry Pin Entry Device* » en anglais). Cette norme sécuritaire consiste notamment à sécuriser le clavier de saisie des terminaux de paiement électronique en protégeant la saisie du code confidentiel, et à bloquer le terminal de paiement électronique en cas d'intrusion (frauduleuse ou accidentelle).

Pour ce faire, on connaît des systèmes qui permettent de protéger des circuits électroniques, parmi lesquels des dispositifs dont l'objectif est d'empêcher d'atteindre un ou plusieurs signaux donnés. De tels systèmes sont par exemple mis en œuvre dans des terminaux de paiement électronique afin d'éviter d'atteindre des parties spécifiquement identifiées à l'intérieur de ces terminaux de paiement électronique.

Plus spécifiquement, on connaît par exemple des techniques particulièrement adaptées à la sécurisation d'une tête de lecture magnétique non CMS (pour Composants Montés en surface), dont les pastilles/terminaisons de montage traversantes (encore appelées « Pad traversants »)
recouvertes par des replis du circuit imprimé flexible utilisé (ou FPC pour « *Flexible Printed Circuit* » en anglais). L'avantage de cette technique réside dans la protection de l'accès à des signaux sensibles sans nécessiter de dispositif de protection complémentaire. En revanche, cette technique présente l'inconvénient principal de nécessiter un processus de montage compliqué et manuel, du fait de la présence nécessaire d'un interposeur entre les terminaisons de montage traversantes et le repli du FPC.

On connaît également des techniques consistant à utiliser un treillis de protection (Wiremesh en anglais) permettant de se prémunir d'un accès ou d'un perçage non autorisé du circuit imprimé en vue d'atteindre une terminaison de soudure par exemple. Une telle protection consiste à introduire une sorte de grillage sous la forme de fines pistes adjacentes couvrant la totalité de la partie à protéger. Par exemple une des pistes peut être reliée à l'alimentation et une autre à la masse. De ce fait, un perçage de ce treillis peut entrainer la coupure de l'une ou de l'autre liaison qui sera détectée, voire un court circuit entre les deux pistes qui sera aussi détecté. De multiples variations de ce dispositif peuvent être utilisées. Les détections peuvent être réalisées sur des niveaux de tensions ou sur la conformité de signaux transitant sur ces pistes.

En revanche, l'utilisation d'un tel treillis entraine des interférences avec les signaux analogiques de faibles amplitudes transitant dans/sur le circuit imprimé et ses composants, comme par exemple les signaux d'une tête de lecture magnétique.

On connaît le document US 2015/097033 concerne un terminal de paiement électronique comprenant des moyens de sécurisation des données du lecteur de carte magnétique, via un assemblage comprenant notamment une couche de transport de données et deux couches de protection de cette couche de transport de données.

Il existe donc un besoin d'une solution qui offre une sécurisation au moins équivalente à la sécurisation offerte par ces techniques de l'art antérieur tout en minimisant ou annulant ses inconvénients, tant en ce qui concerne le processus de montage qu'en ce qui concerne la préservation de l'intégrité des signaux transitant dans le circuit à protéger.

### 3 RÉSUMÉ DE L'INVENTION

La technique proposée se rapporte à un système de sécurisation pour un lecteur de carte magnétique, le système de sécurisation comprenant une tête de lecture magnétique montée en surface, via au moins une terminaison de montage, sur un circuit imprimé flexible, le circuit imprimé flexible comprenant :
- au moins une première couche de transport des signaux analogiques de la tête de lecture magnétique ;
- au moins une couche comprenant une pluralité de pistes reliées à la masse, dite couche de masse, couvrant les signaux analogiques de la première couche, et
- au moins une couche dynamique de sécurité couvrant la couche de masse, ladite couche dynamique de sécurité comprenant un treillis formé d'une pluralité de pistes conductrices, ledit treillis générant un signal numérique aléatoire.

Ainsi, la présente technique propose une solution nouvelle et inventive de la sécurisation d'un lecteur de carte magnétique, permettant une utilisation sécurisée d'une tête de lecture magnétique montée en surface sur un circuit imprimé flexible tout en garantissant l'intégrité des signaux analogiques de la tête de lecture magnétique.

Pour ce faire, le circuit imprimé flexible prévoit une couche de masse couvrant la couche de transport des signaux analogiques de la tête de lecture, de façon à protéger ces signaux des interférences générées par une couche dynamique de sécurité mise en œuvre, au-dessus de la couche de masse, pour sécuriser ces signaux analogiques vis-à-vis d'intrusions malveillantes ou de tentatives d'espionnage.

Ainsi, les potentiels effets négatifs de l'ajout de la couche dynamique de sécurité sont compensés par l'ajout d'une couche de masse entre cette couche de sécurité dynamique et la couche de transport des signaux analogiques de la tête de lecture magnétique.

Selon un aspect particulier de la technique proposée, la couche de masse couvre également au moins une terminaison de montage de la tête de lecture magnétique sur le circuit imprimé flexible.

Selon ce mode de réalisation, la couche de masse protège également les terminaisons de montage de la tête de lecture magnétique, montée en surface sur le circuit imprimé flexible sécurisé. La protection contre les interférences potentielles de la couche de sécurité dynamique s'étend donc également aux terminaisons de montage de la tête de lecture magnétique.

Selon ce mode de réalisation, la couche de sécurité dynamique correspond à un treillis formé de fines pistes adjacentes, agencées comme un grillage, couvrant la totalité de la surface à protéger, en l'occurrence ici la couche de transport des signaux analogiques de la tête de lecture magnétique et les terminaisons de montage de cette dernière, au préalable recouvertes d'une couche de masse, comme décrit précédemment.

De plus, le treillis est dynamique, c'est-à-dire qu'il génère un signal numérique aléatoire, par exemple un signal passant de 2 Volts à 0 Volts, de façon à « tromper » un éventuel dispositif espion.

Selon un aspect particulier, au moins une piste reliée à la masse est imbriquée dans la pluralité de pistes du treillis.

Selon ce mode de réalisation, le treillis dynamique comprend également une ou plusieurs pistes reliées à la masse, afin d'absorber également une partie des perturbations dues au signal numérique aléatoire généré par ce treillis lui-même.

De cette manière, les interférences de la couche de sécurité dynamique sont absorbées à la fois par la couche de masse recouvrant la couche de transport de ces données analogiques (et les terminaisons de montage de la tête de lecture magnétique) et par la masse imbriquée dans la couche de sécurité dynamique, offrant une double protection contre les interférences aux données analogiques de faible amplitude de la tête de lecture magnétique.

Par ailleurs, selon une caractéristique particulière de la technique proposée, le routage de ladite au moins une piste de masse imbriquée est mis en œuvre de sorte à absorber au moins une partie d'interférences générées par la couche de sécurité dynamique.

Selon ce mode de réalisation, c'est le routage particulier des pistes de masse imbriquées dans les pistes de la couche de sécurité dynamique qui assure cette absorption des interférences.

Ce routage dépend par exemple du routage des signaux analogiques de la tête de lecture magnétique.

Selon une autre caractéristique particulière, le routage de la pluralité de pistes de la couche de masse est mis en œuvre de sorte à absorber au moins une partie d'interférences générées par la couche de sécurité dynamique.

Selon ce mode de réalisation, c'est le routage particulier des pistes de la couche de masse qui assure cette absorption des interférences.

Ce routage dépend par exemple du routage des signaux analogiques de la tête de lecture magnétique, la couche de transport de ces signaux se trouvant directement sous la couche de masse.

En particulier, les routages décrits ci-dessus sont adaptés au routage des pistes de la couche de transport.

La présente technique concerne également un lecteur de carte magnétique comprenant un système de sécurisation tel que décrit précédemment, selon ses différents modes de réalisation.

La présente technique se rapporte également à un dispositif électronique comprenant un lecteur de carte magnétique tel que décrit précédemment, selon ses différents modes de réalisation. En particulier, un tel dispositif correspond à un terminal de paiement électronique.

### 4 FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre un exemple de système de sécurisation selon un mode de réalisation de l'invention ;
- les figures 2a à 2d illustrent les différentes couches du circuit imprimé flexible sécurisé selon un mode de réalisation de l'invention.

### 5 DECRIPTION DETAILLEE DE L'INVENTION

Le principe général de l'invention repose sur la modification du circuit imprimé flexible sur lequel est montée en surface une tête de lecture magnétique pour assurer la sécurisation de cette tête de lecture magnétique, et donc du lecteur de carte magnétique, contre d'éventuelles attaques destinées à espionner les données de cette tête de lecture magnétique (par exemple les données sensibles lues de la carte magnétique insérée dans le lecture de carte magnétique comprenant des données confidentielles de transaction).

Pour ce faire, ce circuit imprimé flexible modifié comprend au mois les trois couches suivantes :
- une couche de transport des signaux analogiques de la tête de lecture magnétique ;
- au moins une couche de sécurité dynamique comprenant une pluralité de pistes sous la forme d'un treillis générant un signal numérique aléatoire, et
- au moins une couche de masse insérée entre la couche de transport et la couche de sécurité dynamique.

Ainsi, plutôt que d'ajouter un composant électronique particulier qui vient protéger une zone prédéfinie, le système proposé consiste à la fois :
- à utiliser une tête de lecture magnétique montée en surface sur un circuit imprimé flexible, permettant de simplifier notablement l'architecture du lecteur de carte magnétique, et
- à sécuriser cette tête de lecture magnétique et les signaux transitant dans le circuit imprimé flexible sur lequel elle est montée, grâce à une architecture particulière de ce circuit imprimé flexible lui-même.

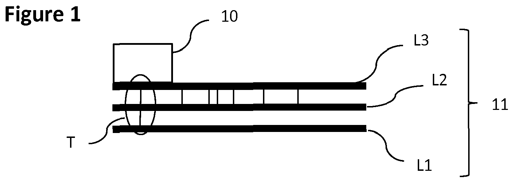

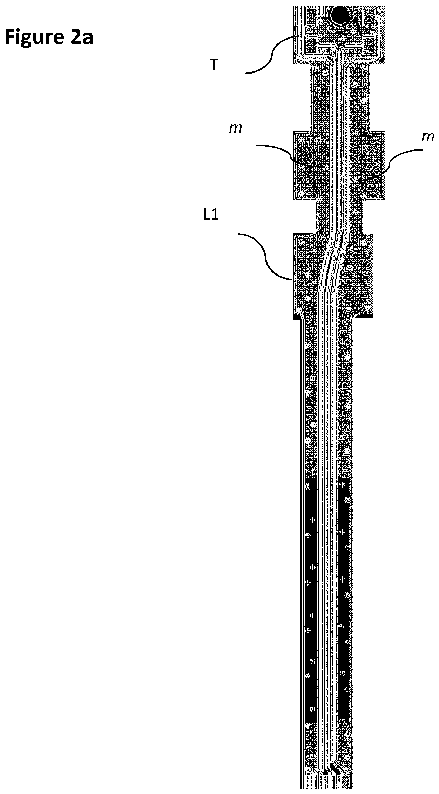

Cette architecture particulière est notamment illustrée, selon des modes de réalisation particuliers de l'invention, par les figures 1 et 2a à 2d décrites ci-après. La présente solution peut être mise en œuvre dans tous les dispositifs électronique comprenant un lecteur de carte magnétique et répondant à des contraintes de sécurité, comme par exemple des terminaux de paiement électronique, des dispositifs d'authentification ou d'identification ou encore des dispositifs de lecture de contenus.

Selon un mode de réalisation de l'invention, illustré par exemple sur la figure 1, la sécurisation du lecteur de carte magnétique est assurée par une couche de sécurité dynamique L3 composée d'un treillis permettant non seulement de détecter toute intrusion par coupure de ses pistes mais également de perturber toute tentative d'espionnage des données de la tête de lecture magnétique par la génération d'un signal numérique aléatoire (par exemple un signal passant de 0 Volts à 2 Volts de manière aléatoire).

Cette couche de sécurité dynamique L3 pouvant entrainer des interférences avec les signaux de la tête de lecture magnétique transitant sur la couche L1, une couche de masse L2, encore appelée blindage, est insérée entre la couche de transport L1 et la couche de sécurité dynamique L3, de manière à absorber une partie des interférences potentiellement générées par la couche de sécurité dynamique L3.

Enfin, un blindage supplémentaire est assuré par l'imbrication d'au moins un piste reliée à la masse dans les pistes du treillis de la couche de sécurité dynamique L3.

Le circuit imprimé flexible 11 sur lequel est montée la tête de lecture magnétique 10, via une ou plusieurs terminaisons de montage T, comprend donc au moins ces trois couches L1, L2 et L3.

Ainsi, la solution proposée permet non seulement :
- de simplifier l'architecture du lecteur de carte magnétique en utilisant une tête de lecture magnétique montée en surface sur un circuit imprimé flexible et donc en s'affranchissant de la nécessité d'ajouter un composant électronique particulier ou en s'affranchissant d'un processus de montage spécifique ;
- d'assurer la sécurité de la tête de lecture magnétique montée en surface grâce à un treillis dynamique, et à l'imbrication du treillis lui-même avec de la masse ;
- tout en renforçant la préservation de l'intégrité des signaux analogiques de faibles amplitudes de la tête de lecture magnétique en limitant l'impact du signal dynamique du treillis, grâce à une couche de masse insérée entre les signaux analogiques et le treillis, et grâce à une imbrication de la masse au sein du treillis lui-même.

Il est à noter que, selon un mode de réalisation permettant d'obtenir une efficacité optimale, les couches L2 (de masse) et L3 (de sécurité dynamique) recouvrent non seulement entièrement les signaux analogiques de la tête de lecture magnétique, mais également les terminaisons de montage T de la tête de lecture magnétique sur le circuit imprimé flexible sécurisé.

Pour ce faire, les différentes couches sont assemblées lors de la fabrication du circuit imprimé flexible sécurisé. Ainsi, le circuit imprimé flexible sécurisé est déjà « pressé » avec les différentes couches lors de l'assemblage sur la tête de lecture magnétique.

Ce mode de réalisation est par exemple illustré en figures 2a à 2d, représentant respectivement les couches L1, L2 et L3, ainsi que les trois couches superposées.

Plus particulièrement, sur la figure 2a correspondant à la couche L1, la partie basse représente une partie des pistes de transport des signaux analogiques de la tête de lecture magnétique, alors que la partie haute représente une partie d'une terminaison de montage T de la tête de lecture magnétique, permettant aux données lues par la tête magnétique de transiter sur les pistes décrites précédemment, en vue de leur traitement par les autres éléments du lecteur de carte magnétique et du dispositif électronique comprenant ce lecteur de carte magnétique. La figure 2a illustre un exemple de configuration particulière des pistes des signaux analogiques de la tête de lecture magnétique, configuration à partir de laquelle les couches de masse L2 et de sécurité dynamique L3 sont spécifiées en vue à la fois d'une sécurisation optimale de ces signaux de la tête de lecture magnétique et d'une absorption maximale des interférences dues à cette sécurisation par la couche L3.

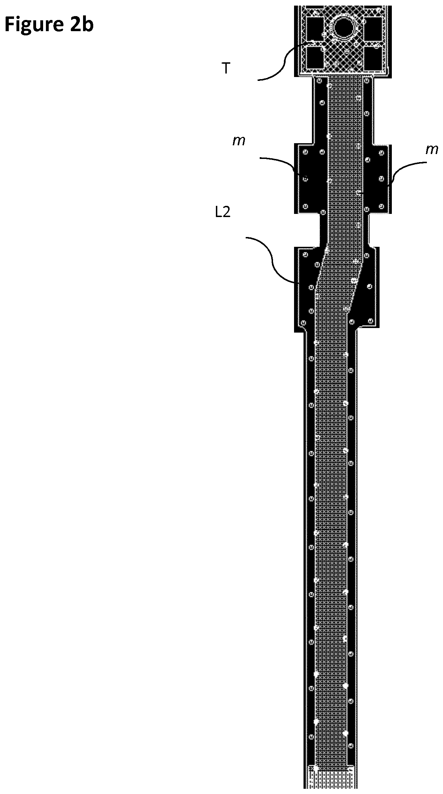

Ainsi, comme illustré sur la figure 2b représentant la couche de masse L2, les pistes reliées à la masse sont routées de manière à recouvrir intégralement les pistes de la couche L1 ainsi que la terminaison de montage T de la tête de lecture magnétique, illustrée sur la partie haute de la figure 2b. De cette manière, tous les signaux analogiques transitant de la tête de lecture magnétique vers le reste du lecteur de carte magnétique sont protégés d'éventuelles interférences générées non seulement par la couche de sécurité dynamique L3, mais également par d'autres éléments du lecteur de carte magnétique ou du dispositif électronique lui-même. Ainsi, on peut effectivement noter que les pistes de masse de cette couche L2 suivent le même design que les pistes de transport des signaux analogiques de la tête de lecture magnétique de la couche L1.

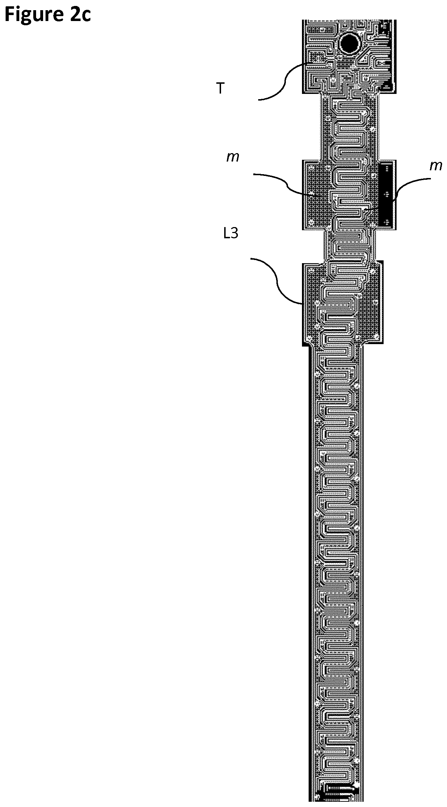

Enfin, comme illustré en figure 2c, une troisième couche L3 est ajoutée, composée d'un treillis dynamique, c'est-à-dire une pluralité de pistes, générant un signal aléatoire. Cette couche de sécurité dynamique L3 comprend également des pistes reliées à la masse, par exemple via les différents points m illustrés sur les figures 2a à 2d, de sorte à renforcer l'absorption des interférences générées notamment par la couche L3 elle-même. Là encore, les pistes du treillis dynamique et les pistes de masse imbriquées sont routées de telle manière à permettre non seulement une sécurisation optimale des signaux analogiques de la couche L1 mais également une absorption optimale des éventuelles interférences. Ainsi, on peut effectivement noter que les pistes de cette couche L3 suivent également le même design que les pistes de transport des signaux analogiques de la tête de lecture magnétique de la couche L1. Le treillis de cette couche L3 recouvre également, selon ce mode de réalisation, les terminaisons de montage T de la tête de lecture magnétique.

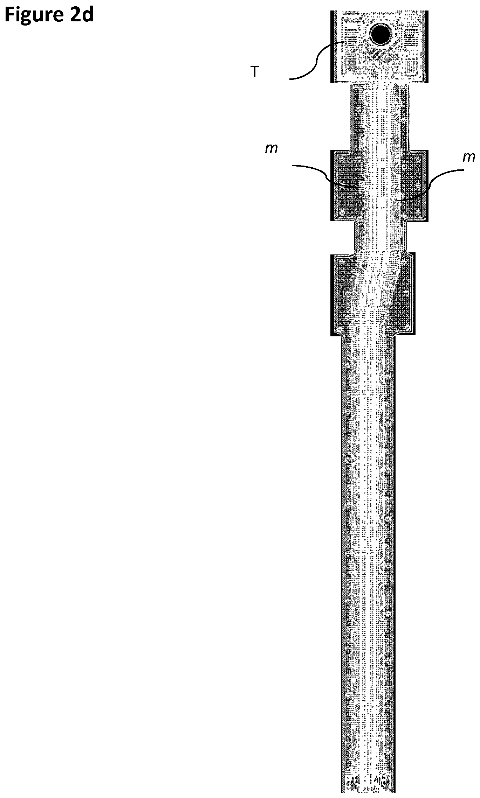

Enfin, la figure 2d illustre ces trois couches L1, L2 et L3 superposées, selon un mode de réalisation du système de sécurisation selon l'invention. De même que pour les figures 2b et 2c, on peut noter que le design global de ces trois couches superposées correspond à celui des pistes de transport des signaux analogiques de la tête de lecture magnétique de la couche L1, de sorte que ces signaux analogiques sont non seulement sécurisés vis à vis d'attaques extérieures grâce au treillis dynamique de la couche L3, mais également protégés des interférences, notamment générées par cette couche L3, grâce à la couche L2 et à la masse imbriquée dans la couche L3.

D'autres architectures ou designs des pistes des signaux analogiques de la tête de lecture magnétique sont évidemment possibles, selon les contraintes d'architecture du lecteur de carte magnétique lui-même, ou du dispositif électronique, et le routage des pistes des couches L2 et L3 sont alors adaptés en conséquence, de façon à atteindre l'objectif de sécurisation et protection contre les interférences.

## Revendications

1. Système de sécurisation pour un lecteur de carte magnétique, ledit système de sécurisation comprenant une tête de lecture magnétique (10) montée en surface, via au moins une terminaison de montage (*T*), sur un circuit imprimé flexible (11), ledit circuit imprimé flexible comprenant :
• au moins une première couche (L1) de transport des signaux analogiques de ladite tête de lecture magnétique (10) ;
• au moins une couche comprenant une pluralité de pistes reliées à la masse, dite couche de masse (L2), couvrant lesdits signaux analogiques de ladite première couche (L1), et
• au moins une couche dynamique de sécurité (L3) couvrant ladite couche de masse (L2), ladite couche dynamique de sécurité comprenant un treillis formé d'une pluralité de pistes conductrices, ledit treillis générant un signal numérique aléatoire.

2. Système de sécurisation selon la revendication 1, **caractérisé en ce que** ladite couche de masse couvre également au moins ladite terminaison de montage de ladite tête de lecture magnétique sur ledit circuit imprimé flexible.

3. Système de sécurisation selon la revendication 2, **caractérisé en ce qu'**au moins une piste reliée à la masse est imbriquée dans ladite pluralité de pistes dudit treillis.

4. Système de sécurisation selon la revendication 3, **caractérisé en ce que** le routage de ladite au moins une piste de masse imbriquée est mis en œuvre de sorte à absorber au moins une partie d'interférences générées par ladite couche de sécurité dynamique.

5. Système de sécurisation selon l'une quelconque des revendications 1 à 4, **caractérisé en ce que** le routage de ladite pluralité de pistes de ladite couche de masse est mis en œuvre de sorte à absorber au moins une partie d'interférences générées par ladite couche de sécurité dynamique.

6. Système de sécurisation selon l'une quelconque des revendications 4 ou 5, **caractérisé en ce que** lesdits routages sont adaptés au routage des pistes de ladite couche de transport (L1).

7. Lecteur de carte magnétique comprenant un système de sécurisation selon l'une quelconque des revendications 1 à 6.

8. Dispositif électronique comprenant un lecteur de carte magnétique selon la revendication 7.

9. Dispositif électronique selon la revendication 8, **caractérisé en ce qu'**il correspond à un terminal de paiement électronique.

## Patentansprüche

1. Sicherungssystem für einen Magnetkartenleser, wobei das Sicherungssystem einen magnetischen Lesekopf (10) aufweist, der über mindestens ein Montageendstück (T) auf einer flexiblen gedruckten Schaltung (11) oberflächenmontiert ist, wobei die flexible gedruckte Schaltung aufweist:
• mindestens eine erste Transportschicht (L1) der analogen Signale des magnetischen Lesekopfes (10),
• mindestens eine Schicht, umfassend mehrere Leiterbahnen, die mit der Masse verbunden sind, die Masse-Schicht (L2) genannt wird, die die analogen Signale der ersten Schicht (L1) bedeckt, und
• mindestens eine dynamische Sicherheitsschicht (L3), die die Masse-Schicht (L2) bedeckt, wobei die dynamische Sicherheitsschicht ein Gitter aufweist, das aus mehreren Leiterbahnen gebildet ist, wobei das Gitter ein willkürliches digitales Signal erzeugt.

2. Sicherungssystem nach Anspruch 1, **dadurch gekennzeichnet, dass** die Masse-Schicht ebenfalls mindestens das Montageendstück des magnetischen Lesekopfes auf der flexiblen gedruckten Schaltung bedeckt.

3. Sicherungssystem nach Anspruch 2, **dadurch gekennzeichnet, dass** mindestens eine Leiterbahn, die mit der Masse verbunden ist, in den mehreren Leiterbahnen des Gitters eingebettet ist.

4. Sicherungssystem nach Anspruch 3, **dadurch gekennzeichnet, dass** das Routing der mindestens einen eingebetteten Massenleiterbahn derart umgesetzt ist, um mindestens einen Teil von Interferenzen zu absorbieren, die von der dynamischen Sicherheitsschicht erzeugt werden.

5. Sicherungssystem nach einem der Ansprüche 1 bis 4, **dadurch gekennzeichnet, dass** das Routing der mehreren Leiterbahnen der Masse-Schicht derart umgesetzt ist, um mindestens einen Teil von Interferenzen zu absorbieren, die von der dynamischen Sicherheitsschicht erzeugt werden.

6. Sicherungssystem nach einem der Ansprüche 4 oder 5, **dadurch gekennzeichnet, dass** die Routings für das Routing der Leiterbahnen der Transportschicht (L1) geeignet sind.

7. Magnetkartenleser, umfassend ein Sicherungssystem nach einem der Ansprüche 1 bis 6.

8. Elektronisches Gerät, umfassend einen Magnetkartenleser nach Anspruch 7.

9. Elektronisches Gerät nach Anspruch 8, **dadurch gekennzeichnet, dass** es einem elektronischen Zahlungsterminal entspricht.

## Claims

1. System for securing a magnetic card reader comprising a surface-mounted magnetic reader head (10), via at least one mounting end (*T*), on a flexible printed circuit (11), said flexible printed circuit comprising:
• at least one first layer (L1) for transporting analogue signals from said magnetic reader head (10);
• at least one layer comprising a plurality of tracks connected to the ground, called ground layer (L2), covering said analogue signals of said first layer (L1), and
• at least one dynamic security layer (L3) covering said ground layer (L2), said dynamic security layer comprising a mesh formed of a plurality of conductive tracks, said mesh generating a random digital signal.

2. Securing system according to claim 1, **characterised in that** said ground layer also covers at least said mounting end of said magnetic reader head on said flexible printed circuit.

3. Securing system according to claim 2, **characterised in that** at least one track connected to the ground is nested in said plurality of tracks of said mesh.

4. Securing system according to claim 3, **characterised in that** the routing of said at least one nested ground track is implemented so as to absorb at least some interferences generated by said dynamic security layer.

5. Securing system according to any one of claims 1 to 4, **characterised in that** the routing of said plurality of tracks of said ground layer is implemented so as to absorb at least some interferences generated by said dynamic security layer.

6. Securing system according to any one of claims 4 or 5, **characterised in that** said routings are adapted to the routing of the tracks of said transporting layer (L1).

7. Magnetic card reader comprising a securing system according to any one of claims 1 to 6.

8. Electronic device comprising a magnetic card reader according to claim 7.

9. Electronic device according to claim 8, **characterised in that** it corresponds to an electronic payment terminal.
